Europäisches Patentamt

European Patent Office

Office européen des brevets

(11) Publication number: **0 464 341 A1**

## EUROPEAN PATENT APPLICATION

(21) Application number: **91107639.6**

(22) Date of filing: **10.05.91**

(51) Int. Cl.5: **A23G 9/20, A47J 43/12**

(30) Priority: **18.05.90 IT 1246290**

(43) Date of publication of application:
**08.01.92 Bulletin 92/02**

(84) Designated Contracting States:
**AT BE CH DE DK ES FR GB GR IT LI LU NL SE**

(71) Applicant: **Carpigiani S.r.L.**
**45, Via Emilia**
**I-40011 Anzola Emilia, Bologna(IT)**

(72) Inventor: **Andolfi, Danilo**
**45, Via Emilia**
**I-40011 Anzola Emilia (BO)(IT)**

(74) Representative: **Porsia, Attilio, Dr. et al**
**c/o Succ. Ing. Fischetti & Weber Via Caffaro**
**3/2**
**I-16124 Genova(IT)**

(54) **Whipped cream making machine.**

(57) Whipped cream making machine comprising, in a single body, a homogenizer (6) with respective pump (4) for feeding air and liquid cream. The tank (8) for containing and feeding the liquid cream is in the form of a double-walled container (108-208) including an interspace (308) whereinto a number of sealed packages (408) filled with a cold-storing liquid may be introduced to give it a sufficient operating autonomy.

Fig.1

The present invention relates to whipped cream making machines, and more particularly to whipped cream making machines of the type comprising an emulsifying member of the labyrinth type also called homogenizer, and a mixing pump for feeding through said homogenizer liquid cream and air which are thoroughly emulsified during the forced travel through the labyrinth passages of the homogenizer, thus producing whipped cream which is dispensed through the outlet end of the homogenizer.

The known whipped cream making machines of the type specified above usually comprise also a small self-contained refrigerating unit, including motor-driven compressor, condenser and evaporator, for cooling the liquid cream contained in the supply tank of the machine, into which the liquid suction pipe of the mixing pump is dipped. An example of such prior art machines is shown by US-A-4.144.293.

The presence of the refrigerating unit considerably increases the space-requirements of the presently-marketed whipped cream making machines and increases their costs, also as a result of the maintenance requirements of said refrigerating unit.

From WO-A-8 810 085 and DE-U-7 103 610 simplified whipped cream making machines are known, according to which the air-and-liquid mixing pump, with the pump operating motor and the homogenizer are housed in a housing, while the liquid cream to be whipped is contained in a separate container, in which the suction pipe of the pump is dipped.

In the said machines the liquid cream is chilled by keeping it in a refrigerator. No means are provided according the above devices for maintaining the liquid cream in a sufficiently refrigerated condition for a reasonable time outside of the refrigerator, and it is known that liquid cream is a strongly perishable food, which is very sensitive to heat. Accordingly, by the above device, the container with the liquid cream has to be stored again after each delivery of whipped cream into a refrigerator, or the like, which renders the said machines unpractical for use in bars, café or the like premises.

Means are known, for instance from GB-A-1 327 000, in the form of a container comprising an inner receptacle providing a cavity adapted to receive a liquid beverage, and an outer receptacle forming a permanently sealed compartment jacketing the walls of the inner receptacle, in which compartment a mass of refreezable aqueous refrigerant is disposed, which may be prefrozen in a freezing compartment of a refrigerator, and which when so prefrozen is apt to lower the temperature of a liquid cream subsequently placed in the said inner receptacle to a conservation temperature for a substantial time.

Whilst such a device could be acceptable for home use, same is not suited for use in concerns, such as bars and the like, in which there is the need of refrigerating during the whole working day substantial amounts of cream, which would request the use of a plurality of the above described devices.

Therefore, the object of the invention is to provide a whipped cream making machine of small space-requirements and low cost, yet of efficient operation, comparable to that of the conventional whipped cream making machines incorporating a refrigerating unit.

The whipped cream making machine of simplified construction according to the invention comprises a homogenizer with respective motor-operated pump for feeding air and liquid cream, and a liquid cream container, and is characterized by the fact that said liquid cream container is in the form of a double-walled container including an open interspace capable of accommodating sealed containers which are filled with an unfreezable liquid, for example, of the type being used in portable iceboxes, so as to permit an easy replacement of the refrigerating elements, so as to give the container a practically unlimited cold-storage autonomy, by simply substituting the said prefrozen sealed containers in said interspace.

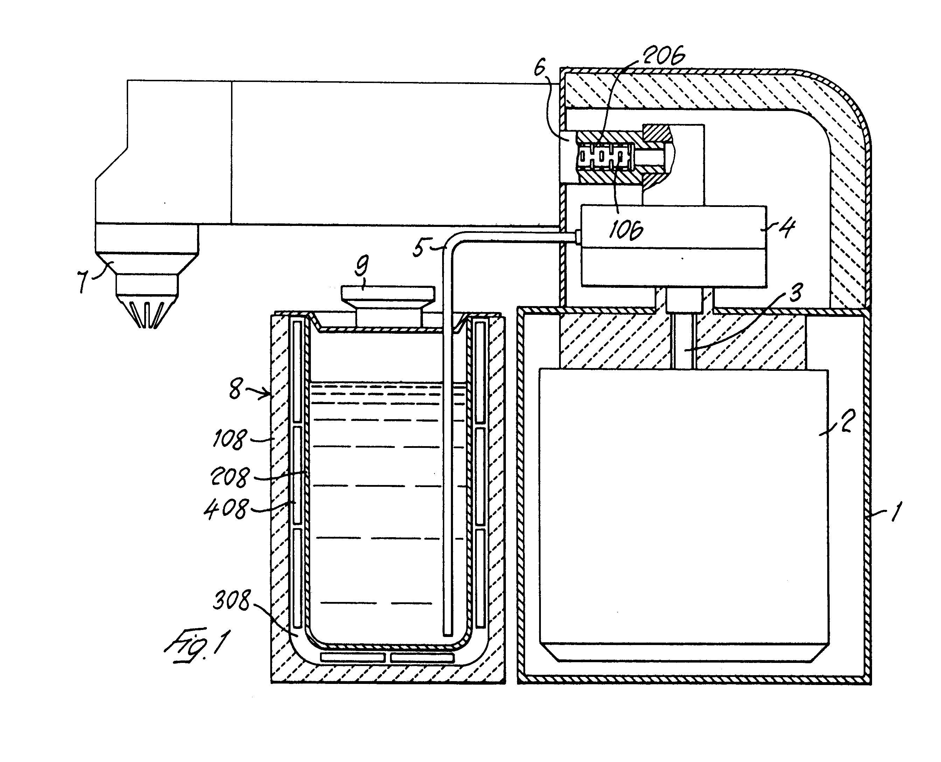

Further objects and advantages of the present invention will become more apparent from the following description made with reference to the accompanying drawing, wherein the single figure is a side elevational and partly sectional view of a preferred embodiment of a whipped cream making machine according to the invention.

With reference to the drawing, the whipped cream making machine shown therein comprises a base 1 housing an electric motor 2 which drives, via a shaft 3, the pump 4. The pump 4 is a conventional positive displacement rotary pump and comprises a suction pipe 5 for the liquid and a suction port (not shown) for air. The delivery side of the pump is connected to the rear end of the homogenizer 6. As shown in sectional view, said homogenizer comprises, in a manner known per se, a central core 106 provided with a set of staggered projections constituting a labyrinth passage, mounted at the interior of a tubular duct 206. The front end of the homogenizer 6 is connected to a whipped cream dispenser 7.

The numeral 8 indicates the liquid cream tank. As shown, said tank comprises an outer vessel 108, preferably of a heat-insulating material, for example of plastics material, housing therein a second vessel 208 having an outer diameter which is smaller than the inner diameter of the outer vessel 108, so as to define an interspace 308 between said two vessels 108-208. Advantageously, said vessel 208 is made of a heat-conducting material, for example of stainless steel. In the interspace 308 are arranged sealed packages 408 containing a cold-accumulating liquid, of the type which is usually used in portable iceboxes, which are prefrozen by introducing them into a freezer. The tank 8 is closed by a cover 9, and the suction pipe 5 from the pump 5 dips down to the bottom of the inner vessel 208.

The operation of the machine described above is now apparent:

The prefrozen packages 408 are introduced into the interspace 308, whereafter the liquid cream to be whipped is introduced into the vessel 208 and the suction pipe 5 is inserted thereinto through the orifice in the cover 9. The whipped cream making machine can be now started by acting on the pushbutton (not shown) feeding the current to the motor 2. Thanks to the cold reserve in the interspace 308 and to the insulation of the tank 8, the liquid cream contained in vessel 208 may be left exposed to the surrounding atmosphere for sufficiently long periods of time. Whenever necessary, the exhausted packages 408 are withdrawn from the space 308, and are substituted with other, prefrozen packages.

It will be thus evident that the "restoration" of cold in the tank 8 is thus very easy. Moreover, instead of using the inner vessel 208 for containing the liquid cream, a package of the sealed paper package type being used for packaging liquid cream, which contains the liquid cream, may be introduced directly into the tank 8, into direct contact with the packages 408, with considerable hygienic advantages. In fact, once the cream in the package is exhausted, said package may be merely disposed of and it may be replaced by a new package of cream.

Although the machine according to the invention has been shown as comprising a liquid cream container in the form of a unit 8 separate from the the base 1, it will be evident that the said container may be advantageously housed in the base 1, and for instance it may be housed in proximity of the pump 4, so as to refrigerate also the pump 4 and at least the rear end of the homogenizer (6).

**Claims**

1. A whipped cream making machine comprising in a single body a homogenizer (6) with respective motor (2)-operated pump (4) for feeding air and liquid cream, characterized in that the tank (8) for containing and feeding the liquid cream is in the form of a double-walled container (108-208) including an open interspace (308) wherein sealed prefrozen packages (408) filled with a cold-accumulating liquid are accomodated into said interspace in an easily removable manner.

2. A machine according to claim 1, in which said tank (8) can accommodate a package of liquid cream into direct contact with said prefrozen sealed packages (408) filled with a cold-accumulating liquid.

3. A machine according to any one of the preceding claims, in which said tank (8) is formed in the body of the said whipped cream making machine.

Fig.1

EP 0 464 341 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-7 103 610   (W. ASCHAUER)<br>* Fig.; abstract * | 1 | A 23 G 9/20<br>A 47 J 43/12 |
| | — — — | | |
| Y | GB-A-1 327 000   (GLACIER WARE)<br>* Figures 1,2; claim 1 * | 1 | |
| | — — — | | |
| A | WO-A-8 810 085   (G. PASSONI)<br>* Figure 1; page 2, paragraph 6 - page 3, paragraph 1 * | | |
| | — — — | | |
| Y | US-A-4 144 293   (H. HAMOTO et al.)<br>* Figure 1; claim 1 * | 1,3 | |
| | — — — | | |
| Y | WO-A-8 807 331   (H. OSROW et al.)<br>* Figures 17,1,4,8; claims 1,13,31 * | 1,3 | |
| | — — — | | |
| A | US-A-4 766 739   (A. CIMENTI) | | |
| | — — — | | |
| A | US-A-4 885 917   (D. SPECTOR) | | |
| | — — — | | |
| A | FR-A-2 581 513   (S. UESAKA et al.) | | TECHNICAL FIELDS SEARCHED (Int. Cl.5) |
| | — — — | | |
| A | FR-A-2 547 991   (S. UESAKA et al.) | | A 23 G |
| | — — — | | |
| A | FR-A-2 470 572   (G.P. CASTA)<br>* Figures 1-5; page 1, lines 4-7; claims 1,2,9,10,12 * | 1,2 | |
| | — — — | | |
| A | DE-A-2 341 848   (F. DELBROUCK)<br>* Figures 1,2; claims 1-7 * | 1,2 | |
| | — — — — — | | |

The present search report has been drawn up for all claims

| Place of search | Date of completion of search | Examiner |
|---|---|---|
| The Hague | 01 October 91 | GUYON R.H. |